# EUROPÄISCHE PATENTSCHRIFT

(11) **EP 2 279 286 B1**
(45) Veröffentlichungstag und Bekanntmachung des Hinweises auf die Patenterteilung: **21.08.2019**
(21) Anmeldenummer: 09745557.0
(22) Anmeldetag: 13.05.2009
(51) Int. Cl.: C23C 18/12

(54) **ALUMINIUMHALTIGES SUBSTRAT MIT EINER MIKROPORÖSEN SCHICHT EINES ALUMINIUMPHOSPHAT-ZEOLITHS, EIN VERFAHREN ZU DESSEN HERSTELLUNG UND DESSEN VERWENDUNG**
ALUMINUM-CONTAINING SUBSTRATE COMPRISING A MICROPOROUS LAYER OF AN ALUMINUM PHOSPHATE ZEOLITE, METHOD FOR THE PRODUCTION THEREOF, AND USE THEREOF
SUBSTRAT CONTENANT DE L'ALUMINIUM ET DOTÉ D'UNE COUCHE MICROPOREUSE FAITE D'UN ZÉOLITHE DE PHOSPHATE D'ALUMINIUM, PROCÉDÉ PERMETTANT DE LE PRODUIRE ET UTILISATION DUDIT SUSBTRAT

(30) Priorität: 15.05.2008 DE 102008023634
(43) Veröffentlichungstag der Anmeldung: 02.02.2011
(73) Patentinhaber: Fahrenheit GmbH, 80803 München (DE)
(72) Erfinder: BAUER, Jürgen, 96215 Lichtenfels (DE); HERRMANN, Ralph, 06118 Halle (DE); SCHWIEGER, Wilhelm, 91080 Spardorf (DE); AVHALE, Abhijeet, 1024 AG Amsterdam (NL)
(74) Vertreter: Letzelter, Felix Phillip
(86) Internationale Anmeldenummer: PCT/EP2009/003408
(87) Internationale Veröffentlichungsnummer: WO 2009/138223

(56) Entgegenhaltungen:
- WO-A1-96/01686
- WO-A2-2006/048211
- DE-A1- 10 304 322
- DE-A1-102004 041 836
- US-A1- 2003 091 872

## Beschreibung

Die Erfindung betrifft ein aluminiumhaltiges Substrat mit mindestens einer oberflächlich aufgebrachten mikroporösen Schicht eines Aluminiumphosphat-Zeoliths (ALPO) und weiteren Schichten, ein Verfahren zur Herstellung dieses beschichteten aluminiumhaltigen Substrats sowie vorteilhafte Verwendungen hiervon.

Aluminiumsubstrate der vorstehend beschriebenen Art sind beispielsweise aus der US 2003/0091872 A1 sowie der WO 2006/048211 A2 bekannt. Die US 2003/091872 A1 betrifft ein Verfahren zur Ausbildung einer Schicht eines Aluminosilikat-Zeoliths auf einem metallhaltigen Substrat, was durch die Verwendung wässriger Synthese-Suspensionen für klassische Aluminosilikat-Zeolithe erfolgt. Nach dem Einbringen eines aluminiumhaltigen Substrats in die Suspension werden teilweise Aluminiumatome des Substrats in das Zeolith-Netzwerk eingebaut, wodurch die Haftung der Zeolith-Schicht auf dem Substrat verbessert wird. Die Si- und Al-Quellen in der Lösung liefern das Baumaterial für die zu bildende Zeolith-Schicht, wobei diese Quellen zueinander in stöchiometrischem Verhältnis stehen. Dieser bekannte Vorschlag stellt nicht zufrieden. Danach bilden sich zwar bei der Aufkristallisation auf aluminiumhaltige Substrate Schichten aus klassischen Aluminiumsilikat-Zeolithen. Deren Verankerung am Substrat ist unbefriedigend. Demgegenüber führt die Lehre nach der WO 2006/048211 A2 zu einer Verbesserung. Auch hier handelt es sich insbesondere um ein Verfahren zur Ausbildung einer Zeolith-Schicht auf einem aluminiumhaltigen Substrat. Es wird eine wässrige Suspension hergestellt, die wenigstens ein netzwerkbildendes Element für den Zeolithen umfasst, wobei das aluminiumhaltige Substrat wenigstens eines der netzwerkbildenden Elemente aufweist. Auch hier wird das aluminiumhaltige Substrat in eine wässrige Suspension eingebracht, wobei sich auf dem Substrat durch in-situ-Kristallisation eine Zeolith-Schicht ausbildet. Kern der Erfindung gemäß der WO 2006/048211 A2 ist es, dass wenigstens eines der in der wässrigen Suspension vorliegenden netzwerkbildenden Elemente für den Zeolith-Bildungsprozess und die Endstruktur des Zeoliths im stöchiometrischen Unterschuss vorliegt. Das Molverhältnis zwischen (dem) den im Unterschuss vorliegenden netzwerkbildenden Element(en) in der wässrigen Suspension zur Summe aller in der wässrigen Suspension vorliegenden netzwerkbildenden Elemente liegt unter 0,5. Dem aluminiumhaltigen Substrat werden die im Unterschuss vorliegenden netzwerkbildenden Elemente entzogen und in die Zeolith-Schicht eingebaut. Vorzugsweise ist ein netzwerkbildendes Element Phosphor, der in der wässrigen Suspension vorliegt. In einem derartigen Fall wird auf dem Substrat ein Aluminiumphosphat-Zeolith ausgebildet. Dabei kann das netzwerkbildende Element beispielsweise auf Phosphorsäure oder verschiedene Ammoniumphosphate zurückgehen.

Für den aus der WO 2006/048211 A2 bekannten technischen Vorschlag ist es also wesentlich, dass mindestens eines der netzwerkbildenden Elemente in der beschriebenen wässrigen Suspension in stöchiometrischem Unterschuss vorliegt. Daraus resultieren vielfältige Vorteile: So zeigt die auf dem aluminiumhaltigen Substrat ausgebildete Zeolith-Schicht eine zuverlässige Verankerung und eine sehr gute Anhaftung. Die Orientierung der Kristalle verläuft im Wesentlichen senkrecht zur Oberfläche des aluminiumhaltigen Substrats. Diese besondere Orientierung bedeutet eine weitgehend gleichmäßige Ausrichtung der Kristalle und gewährleistet die gleichmäßige Zugänglichkeit von Reaktanten in das Mikroporensystem der hergestellten Kristalle der Zeolith-Schicht.

Somit ist der oben geschilderte Stand der Technik vor dem Hintergrund einer *"Aufkristallisation"* einer Zeolith-Schicht, insbesondere eines Aluminiumphosphat-Zeoliths (ALPO) zu sehen. Wenn hier von *"Aluminiumphosphat"* und *"ALPO"* gesprochen wird, dann sollen hier gleichzeitig die Substitutionsderivate *"SAPOs", "MeAPOs"* und *"MeSAPOs"* einbezogen sein.

Bei dem vorstehend dargestellten Stand der Technik werden werden keine Bindemittel herangezogen. Dies ist vorteilhaft. Jedoch wachsen nicht alle Zeolithe auf diese Weise auf die Oberfläche des aluminiumhaltigen Substrats auf. In vielen Fällen, insbesondere bei den im stark alkalischen Medium kristallisierenden Aluminosilikaten, kann es zu einer unkontrollierbaren Auflösungsreaktion kommen, die zu einer Zerstörung des metallhaltigen Substrats führt. Andere Zeolithe wachsen nur schwer direkt auf metallischen oder keramischen Oberflächen auf, weil die Zusammensetzung, Struktur oder das Oberflächenpotential dieser Oberflächen einen abstoßenden Effekt auf die molekularen Bausteine (building units) der Zeolithe haben. Für die Adsorption von Molekülen in Katalyse, Reinigung und Adsorptionsprozessen sowie für die Stofftrennung ist der Stofftransport innerhalb der Zeolith-Schicht oft der geschwindigkeitsbegrenzende Faktor. Werden also dickere Schichten benötigt, dann ergibt sich von einer kritischen Schichtdicke an stets ein negativer Einfluss für den Stofftransport in die und aus der Zeolith-Schicht.

Ein weiterer Stand der Technik im vorliegenden Bereich ergibt sich aus der WO 96/01686. Diese WO-Schrift offenbart zunächst ein System mit verbesserter selektiver Durchlässigkeit von Molekülen. Es beruht auf einem Substrat, einer Zeolith- oder Zeolith-ähnlichen Schicht, einer die Selektivität verbessernden Beschichtung, die mit der Zeolith- oder Zeolith-ähnlichen Schicht in Kontakt steht, und fakultativ einer permeablen Zwischenschicht in Kontakt mit dem Substrat. Die Zeolith-Schicht oder Zeolith-ähnliche Schicht steht mit dem Substrat und/oder der fakultativ vorgesehenen Zwischenschicht in Kontakt. Die Beschichtung kann permeabel oder impermeabel sein. Permeable Materialien können eine poröse Struktur haben, die die Moleküle transportieren, so dass sie durch den Zeolith treten können. Sie können auch ein schlichtes Material sein, welches ein freies Volumen aufweist, das ausreicht, die Moleküle durchtreten und dann durch den Zeolithen wandern zu lassen. Eine bevorzugte Beschichtung besteht aus einem Polyimid. Polyimid-Beschichtungen bzw. -filme haben nach der Offenbarung dieser WO-Schrift eine sehr niedrige Permeabilität für Moleküle niederer Kohlenwasserstoffe. Dennoch sollten sie eine ausreichende Permeabilität aufweisen und die Selektivität verbessernd sein. Allerdings zeigen Polyimide den Nachteil, dass sie bei eventuell in Betracht gezogenem Calzinieren verbrennen würden. Ein weiteres Beispiel für eine solche Beschichtung ist Siliziumdioxid. Auch dieses kann permeabel oder nicht permeabel sein. Die Selektivitätsverbesserung durch die aufgebrachte Schicht auf bestimmten Abschnitten der Zeolithschicht beruht auf einem rein physikalischen Versperren von ungewollten Öffnungen in der Zeolithschicht. Eine intrinsische Funktionalität chemischen Charakters durch spezielle Materialeigenschaften, die über eine einfache, lokale Transportblockierung hinausgeht, wird nicht erreicht.

Offensichtlich ist es für das Material nach diesem Stand der Technik nicht wichtig, welcher Art das angesprochene Substrat sein soll. Es kann porös oder nicht porös sein. Vorzugsweise beruht es auf anorganischen Oxiden oder nicht rostendem Stahl. Es sollte sich hier auch um keramische Materialien, Metalle, Carbide, Polymere und Mischungen hiervon handeln können. Des Weiteren sollen lichtbrechende Oxide, Aluminiumoxid, Titanoxid, Siliziumoxid, Siliziumcarbid, Kohlenstoff, Graphit, Siliziumnitrid oder Mischungen davon in Betracht kommen. Auf einem solchen Substrat können dann insbesondere Schichten aus beliebigen Zeolithen ausgebildet werden. Konkret und bevorzugt wird Aluminiumsilikat MFI angegeben, insbesondere in den Beispielen.

Zum Stand der Technik ist noch auf folgende Literaturstellen hinzuweisen: Aus der DE 10 2004 041836 sowie aus der DE 103 04 322 A1 geht es nach dem Anspruch 1 darum, eine erste Schicht durch zwei Schritte auszubilden, wobei beim ersten Schritt Zeolith-Seed-Kristalle auf den Träger kristallisiert werden und in einem zweiten Kristallisationsschritt eine "geschlossene Schicht weitergezüchtet" wird. Anspruch 7 führt zwar aus, dass weitere Kristallisationsschichten auf der nach Anspruch 1 hergestellten Schicht durch zusätzliche Kristallisationsschritte ausgebildet werden. Es geht daraus nicht hervor, dass sich das Material der Primärschicht von dem Material der mikro- oder mesoporösen Schicht, wie im folgenden Anspruch 1, der die vorliegende Erfindung bezeichnet, dargestellt wird, insbesondere mit den Merkmalen a) und b), unterscheidet. Es werden keinerlei Angaben zu den Porenstrukturen gemacht.

Auch die WO 96/01686 A1 offenbart keine Sachverhalte von besonderer Relevanz: Im Anspruch 1 der WO-Schrift wird eine spezielle Struktur bezeichnet, wobei auf einem Substrat eine Zeolith- oder Zeolith-ähnliche Schicht, eine die Selektivität begünstigende Schicht (auf der Zeolithschicht) und gegebenenfalls eine permeable Zwischenschicht (in Kontakt mit dem Substrat) ausgebildet sind, wobei die Zeolithschicht mit dem Substrat in Kontakt steht und zusätzlich eine optionale Zwischenschicht vorgesehen ist. Bei dieser optionalen Zwischenschicht kann es sich insbesondere um eine mikroporöse oder mesoporöse, das Wachstum begünstigende Schicht handeln, die Zeolith enthält. In der WO-Schrift findet sich kein Hinweis, dass es sich bei der mikroporösen Schicht um eine Aluminiumphosphat-Zeolith (ALPO)-Schicht handelt. Zudem wird nirgendwo auf besondere Bedingungen, die bei der nachfolgend geschilderten Erfindung einzuhalten sind, eingegangen. Auch spielt eine Unterschiedlichkeit der beiden Schichten in der chemischen Art und in der Porosität keine Rolle.

Der Erfindung lag daher die Aufgabe zugrunde, die eingangs bezeichneten aluminiumhaltigen Substrate mit mindestens einer oberflächlich aufgebrachten mikroporösen Schicht eines Aluminiumphosphat-Zeoliths (ALPO) und weiteren Schichten so weiterzubilden, dass die angesprochenen Nachteile der Stofftransportlimitierung (Druckverlust) behoben bzw. zumindest deutlich verringert werden. Darüber hinaus soll die Ausbildung von Mehrfachschichten zur Begünstigung besonderer angestrebter technischer Effekte möglich werden. Es soll gleichfalls ein zur Herstellung eines solchen, definiert beschichteten aluminiumhaltigen Substrats geeignetes Verfahren vorgeschlagen werden. Auch sollten weitere vorteilhafte Verwendungsmöglichkeiten erschlossen werden.

Als Lösung dieser Aufgabe schlägt die Erfindung ein aluminiumhaltiges Substrat mit mindestens einer oberflächlich aufgebrachten mikroporösen Schicht eines Aluminiumphosphat-Zeoliths (ALPO) und weiteren Schichten vor, das dadurch gekennzeichnet ist, dass die mikroporöse Schicht des Aluminiumphosphat-Zeoliths (ALPO) eine Primärschicht darstellt, auf der sich ein vom Material der Primärschicht unterscheidendes mikro- oder mesoporöses Sekundärmaterial befindet, die mikroporöse Primärschicht und das mikro- oder mesoporöse Sekundärmaterial eine Unterschiedlichkeit in der chemischen Art und in ihrem Porensystem aufweisen, wobei 1.) die mikroporöse Primärschicht und das mikroporöse Sekundärmaterial a1) eine Unterschiedlichkeit in einer graduell abgestuften Porosität aufweisen, wobei die mikroporöse Primärschicht einen mittleren Porendurchmesser von 0,2 bis 1 nm und das mikroporöse Sekundärmaterial einen mittleren Porendurchmesser von 0,4 bis 1,5 nm aufweist und b1) eine Unterschiedlichkeit in der chemischen Art zeigen, wobei das mikroporöse Sekundärmaterial in Form von zeolithischen Silikaten oder Alumosilikaten vorliegt, oder 2.) die mikroporöse Primärschicht und das mesoporöse Sekundärmaterial a2) eine Unterschiedlichkeit in einer graduell abgestuften Porosität aufweisen, wobei die mikroporöse Primärschicht einen mittleren Porendurchmesser von 0,2 bis 1 nm und das mesoporöse Sekundärmaterial einen mittleren Porendurchmesser von 2 bis 5 nm aufweist und b2) eine Unterschiedlichkeit in der chemischen Art zeigen, wobei das mesoporöse Sekundärmaterial in Form von Silikaten vorliegt.

Somit wendet sich die Erfindung von dem vorstehend beschriebenen Stand der Technik insbesondere dadurch ab, dass auf dem aluminiumhaltigen Substrat nicht nur eine Zeolith-Schicht ausgebildet wird, sondern der bezeichneten Primärschicht das unterscheidende mikro- oder mesoporöse Sekundärmaterial, geschlossen oder unterbrochen, folgt. Damit ist es möglich, Zeolith-Typen, die bisher nicht oder nur sehr schwierig durch direkte Kristallisationsprozesse auf einer Trägerschicht aufwuchsen, nun deutlich besser und auch ohne Trägerauflösung als Schichten zu kristallisieren. Die erfindungsgemäße Lehre in der gezeigten Abstraktheit führt zu deutlichen Verbesserungen bzw. Vorteilen gegenüber dem geschilderten Stand der Technik. Die mikroporöse Schicht des Aluminiumphosphat-Zeoliths in Form der Primärschicht zeigt eine besonders vorteilhafte feste Bindung an das unterscheidende mikro- oder mesoporöse Sekundärmaterial, sei es geschlossen oder unterbrochen. Dies führt zu einer besseren Zugänglichkeit bei dickeren und deutlich stabiler verankerten Zeolith-Schichten auf dem jeweiligen aluminiumhaltigen Substrat. Schließlich ermöglicht die Erfindung eine erweiterte Zeolith-Auswahl bei der Herstellung von binderfreien Zeolith-Schichten. Somit werden auch solche Materialien als Schicht zugänglich, die bei direkter Kristallisation das Trägermaterial auflösen würden oder nur sehr geringe Neigung zur Kristallisation auf dessen Oberflächen haben. Es wird ferner eine verbesserte Flexibilität in der Steuerung der Eigenschaften von Schichten aus mikroporösen Materialien durch die Kombination einerseits der mikroporösen Schicht des Aluminiumphosphat-Zeoliths als Primärschicht sowie andererseits des bezeichneten Sekundärmaterials erreicht. Die Kristallisation vieler Zeolith-Typen auf dem aluminiumhaltigen Substrat lässt sich durch die Ausbildung der Primärschicht beschleunigen und bei milderen Bedingungen durchführen. Insbesondere durch die Kombination von Zeolithen unterschiedlicher Porenweiten lassen sich hierarchisch aufgebaute Porensysteme herstellen, die einen besonders begünstigten Stofftransport ermöglichen (sh. Martin Hartmann, Angew Chem Int. Ed Engl. 2004 Nov 12; 43(44):5880-2), d.h. es handelt sich hier um hierarchische Porensysteme mit gestaffelter Porenweite.

Die vorstehenden Schilderungen zeigen, dass sowohl der mikroporösen Primärschicht als auch dem mikro- oder mesoporösen Sekundärmaterial, geschlossen, so beispielsweise in Form einer Schicht, oder unterbrochen, pe se bereits die Funktion zukommt, bei den Anwendungsfällen, bei denen ein Stoffstrom, insbesondere ein Gasstrom, verlangt wird, einen solchen zu ermöglichen. Bei den wesentlichen Anwendungen bestimmt die Art des Sekundärmaterials im Wesentlichen die gewünschte Funktion. Somit könnte man bei diesem von einem *"funktionellen porösen Sekundärmaterial"* bzw. einem *"funktionellen mikro- oder mesoporösen Sekundärmaterial"* sprechen. Daher wird nachfolgend im Einzelfall auch von einem *"funktionellen Sekundärmaterial"* gesprochen, ohne dass darin eine Einschränkung im technologischen Sinne gesehen werden soll.

Besonders vorteilhafte Ausgestaltungen des erfindungsgemäßen aluminiumhaltigen Substrats werden nachfolgend im Einzelnen dargestellt:
Das erfindungsgemäße aluminiumhaltige Substrat weist mindestens eine oberflächlich aufgebrachte mikroporöse Schicht eines Aluminiumphosphat-Zeoliths (ALPO) auf. Diese Materialien haben im Sinne der Erfindung den Vorteil, dass bei einer in-situ-Kristallisation ihre chemische Zusammensetzung nicht durch Aluminium aus dem aluminiumhaltigen Substrat verändert werden kann und sie zudem im nachgeschalteten Bildungsprozess des mikro- oder mesoporösen Sekundärmaterials dieses nicht durch z.B. eigene Gegenionen ungewollt beeinflussen. Das aluminiumhaltige Substrat ist vorzugsweise Aluminium, eine aluminiumhaltige Legierung, insbesondere ein mit Aluminium legierter Stahl, oder eine aluminiumhaltige Keramik, wie in Einzelfällen Aluminiumoxid.

Das erfindungswesentliche funktionelle Sekundärmaterial ist mikro- oder mesoporös. Vorzugsweise liegt das mikroporöse Sekundärmaterial als ALPO, insbesondere als SAPO, MeAPO oder MeSAPO vor oder allgemein in Form von zeolithischen Alumosilikaten oder Silikaten, insbesondere als FAU, MFI, LTA, BEA, CHA. Geschlossene, nicht poröse Sekundärmaterialien mit spezieller Funktionalität könnten ebenso aufgebracht werden, verhindern dann aber den Stofftransport. Es gilt als bevorzugt, dass das mesoporöse Sekundärmaterial in Form von Silikaten vorliegt.

Erfindungsgemäß weist die mikroporöse Primärschicht einen mittleren Porendurchmesser von 0,2 bis 1,0 nm, insbesondere 0,3 bis 0,7 nm, auf. Der mittlere Porendurchmesser der mikroporösen Primärschicht ist vorzugsweise kleiner als der des porösen Sekundärmaterials. In Einzelfällen kann es jedoch auch zweckmäßig sein, wenn in der Sekundärschicht die kleineren und in der Primärschicht die größeren Poren vorliegen. Des Weiteren ist es vorteilhaft, wenn der mittlere Porendurchmesser des mikroporösen Sekundärmaterials 0,4 bis 1,5 nm, insbesondere 0,5 bis 1,3 nm beträgt. Der mittlere Porendurchmesser des mesoporösen Sekundärmaterials liegt zwischen 2 bis 5 nm, insbesondere zwischen 2,5 bis 4 nm. Für die mit der Erfindung angestrebten vorteilhaften technischen Ergebnisse ist die Stärke der Primärschicht sowie der geschlossenen oder unterbrochenen Schicht des mikro- oder mesoporösen Sekundärmaterials nicht kritisch beschränkt. Es hat sich als vorteilhaft erwiesen, wenn die mikroporöse Primärschicht eine Stärke von mindestens etwa 1 µm und/oder das mikro- oder mesoporöse Sekundärmaterial eine Stärke von mindestens etwa 1 µm, insbesondere mindestens etwa 5 µm aufweisen. Schichtdicken unter etwa 1 µm führen meist zu unterbrochenen Primärschichten. Demzufolge ist es, wie gesagt, nicht zwingend, dass die Oberfläche der Primärschicht vollständig von dem porösen Sekundärmaterial bedeckt ist. Es ist in Einzelfällen völlig hinlänglich, wenn ein mehr oder weniger unterbrochener Auftrag erfolgte. In der Regel ist es hinlänglich, wenn die Oberflächenbedeckung bei der unterbrochenen Ausbildung mehr als etwa 60%, insbesondere mehr als etwa 90% beträgt.

Bei der praktischen Verwirklichung der Erfindung hat es sich darüber hinaus als vorteilhaft erwiesen, wenn die mikroporöse Primärschicht und das mikro- oder mesoporöse Sekundärmaterial eine Unterschiedlichkeit in der chemischen Art der porösen Stoffe sowie ihrer Porosität aufweisen, wie oben durch die erfindungsgemäße Lösung dargestellt. Wenn von einer graduellen abgestuften Porosität gesprochen wird, dann ist dies insbesondere wie folgt zu verstehen. Es handelt sich um eine "hierarchische" Porosität, die den Stofftransport begünstigen soll. Des Weiteren ist die abgestufte Porosität dadurch gekennzeichnet, dass es durch eine angepasste Porenweitendifferenz zu einem "Trichtereffekt" kommt, der den Stoffübergang von einem zum anderen Porensystem fördert. Durch die abgestufte Porosität kann der Stofftransport besser als in gleich dicken Schichten der mikroporösen Schicht des Aluminiumphosphat-Zeoliths und des mikro- oder mesoporösen Sekundärmaterials, insbesondere in Form eines Zeolithen, erfolgen. Als Beispiele in der Unterschiedlichkeit der chemischen Art seien die Gitterzusammensetzung, enthaltene Gegenionen oder Einschlüsse sowie Hydrophilie und Acidität des Materials angegeben. Damit ist auch immer eine funktionelle Eigenschaft chemischer Natur oder eine Eigenschaft, die chemische Wirkung zeigt und die über rein physikalische, lokale Transportblockierungen hinausgeht, verbunden. Die unterschiedliche Porosität lässt sich vorteilhaft im Rahmen der oben dargestellten Porositätsrahmen einstellen. Zur Art und der Orientierung des Porensystems lässt sich ausführen, dass die Kombination von zweidimensionalen Porenkanalsystemen mit dreidimensionalen Porennetzwerken bzw. ein vorzugsweise senkrecht zur Trägeroberfläche orientiertes Porensystem im Sekundärmaterial auf einer Primärschicht mit dreidimensionalen Porensystemen (3-D) vorteilhafte Diffusionseigenschaften ermöglichen.

Eine besonders vorteilhafte technische Ausbildung der Erfindung erweist sich in der Verwendung des aluminiumhaltigen Substrats nach Anspruch 10, wobei die mikroporöse Primärschicht, das mikroporöse oder mesoporöse Sekundärmaterial und das weitere Material zur Begünstigung des Stofftransports bei der Anwendung eine graduell abgestufte Porosität aufweisen.

In Einzelfällen kann es vorteilhaft sein, wenn auf dem mikro- oder mesoporösen Sekundärmaterial mindestens ein weiteres Material ausgebildet ist, dem eine Funktionalität zugeschrieben werden kann, wie sie oben definiert wurde. Insbesondere kann es sich hierbei um ein funktionelles poröses Material handeln.

Dabei ist es weitergehend bevorzugt, wenn die mikroporöse Primärschicht, das mikro- oder mesoporöse Sekundärmaterial und weitere aufgebrachte poröse Materialien zur Begünstigung des Diffusionsverhaltens bei der Anwendung eine graduell abgestufte Porosität aufweisen. Es gibt auch Anwendungsfälle, bei denen es zweckmäßig ist, wenn das beschichtete aluminiumhaltige Substrat eine äußere Schicht aufweist, die die Funktion einer Anti-Fouling-Schicht erfüllt. Die Flexibilität des erfindungsgemäßen aluminiumhaltigen Substrats erweist sich darin, dass vorteilhafterweise die mikroporöse Primärschicht und/oder das poröse Sekundärmaterial funktionell wirkende Substanzen und/oder Metallionen enthalten können, insbesondere katalytisch wirksame Metallionen. Hierbei sind insbesondere Metallionen, wie Platin-, Palladium-, Ruthenium-, Eisen-, Kupfer-, Kobalt-, Zink- oder Nickelionen, bevorzugt.

Als Ergebnis können demzufolge verschiedene funktionelle Beschichtungen unterschiedliche vorteilhafte Anwendungsmöglichkeiten erschließen, so z.B. für den Foulingschutz, für eine heterogene Katalyse, für eine Stofftrennung, auch in Verbindung mit einer Katalyse, für die Adsorption sowie Stoffreinigung und Energieumwandlung.

Das erfindungsgemäße beschichtete Aluminiumsubstrat, wie vorstehend dargestellt, zeigt besonders vorteilhaften Nutzen bei der Verwendung als Wärmetauscher, als katalytischer Reaktor oder als Bauelement in der Wärmetransformationstechnik oder als Bauelement mit Anti-Fouling-Wirkung.

Die Vorteile, die das aluminiumhaltige Substrat gemäß der Erfindung zeigt, werden insbesondere dann erzielt, wenn das von der Erfindung vorgeschlagene Verfahren zu dessen Herstellung herangezogen wird.

Hierbei handelt es sich um ein Verfahren zur Herstellung eines aluminiumhaltigen Substrats der vorstehend geschilderten Art, wobei 1. ein aluminiumhaltiges Substrat in einer mindestens Phosphor als netzwerkbildendes Element enthaltenden wässrigen Suspension hydrothermal behandelt und darauf durch eine in-situ-Kristallisation eine mikroporöse Primärschicht eines Aluminiumphosphat-Zeoliths ausgebildet wird, wobei das Mol-Verhältnis zwischen dem in der wässrigen Suspension im Unterschuss vorliegenden netzwerkbildenden Aluminium zur Summe aller in der wässrigen Suspension vorliegenden netzwerkbildende Elemente unter 0,5 liegt, so dass das erforderliche Aluminium zum Ausgleich des Unterschusses dem aluminiumhaltigen Substrat entnommen wird, und 2. auf der mikroporösen Primärschicht ein mikro- oder mesoporöses Sekundärmaterial dadurch ausgebildet wird, indem das die mikroporöse Primärschicht aufweisende aluminiumhaltige Substrat einer weiteren Behandlung in einer wässrigen Suspension, die die erforderlichen netzwerkbildenden Elemente für die Ausbildung des mikro- oder mesoporösen Sekundärmaterials enthält, in einer solchen Weise durchgeführt wird, dass die mikroporöse Primärschicht und das mikro- oder mesoporöse Sekundärmaterial eine Unterschiedlichkeit in der chemischen Art und in ihrem Porensystem aufweisen, wobei 1.) die mikroporöse Primärschicht und das mikroporöse Sekundärmaterial a1) eine Unterschiedlichkeit in einer graduell abgestuften Porosität aufweisen, wobei die mikroporöse Primärschicht einen mittleren Porendurchmesser von 0,2 bis 1 nm und das mikroporöse Sekundärmaterial einen mittleren Porendurchmesser von 0,4 bis 1,5 nm aufweist und b1) eine Unterschiedlichkeit in der chemischen Art zeigt, wobei das mikroporöse Sekundärmaterial in Form von zeolithischen Silikaten oder Alumosilikaten vorliegt, oder 2.) die mikroporöse Primärschicht und das mesoporöse Sekundärmaterial a2) eine Unterschiedlichkeit in einer graduell abgestuften Porosität aufweisen, wobei die mikroporöse Primärschicht einen mittleren Porendurchmesser von 0,2 bis 1 nm und das mesoporöse Sekundärmaterial einen mittleren Porendurchmesser von 2 bis 5 nm aufweist und b2) eine Unterschiedlichkeit in der chemischen Art zeigen, wobei das mesoporöse Sekundärmaterial in Form von Silikaten vorliegt.

Das oben unter Maßnahme 1. dargestellte Verfahren der "Unterschuss-Technologie" geht im Wesentlichen aus der eingangs bereits erörterten WO2006/048211, nämlich aus der darin als bevorzugt herausgestellten Verfahrenslehre, hervor. Dabei ist ersichtlich, dass zur Ausbildung der mikroporösen Schicht des Aluminiumphosphat-Zeoliths (ALPO) in der eingesetzten wässrigen Suspension, in der das aluminiumhaltige Substrat mit einer mikroporösen Primärschicht versehen wird, als netzwerkbildendes Element Phosphor enthalten ist. Darin kann der Phosphor beispielsweise als Phosphorsäure oder als Phosphat, insbesondere in Form wasserlöslicher Phosphate, enthalten sein. Darüber hinaus kommen insbesondere als wasserlösliche Phosphate Ammoniumphosphate in Frage.

Für den Fall, dass es sich bei dem Aluminiumphosphat-Zeolith (ALPO) um einen Zeolith handelt, der, wie beispielsweise SAPO, Silizium enthält, enthält die wässrige Suspension als netzwerkbildendes Element auch Silizium. In diesem Fall wird das Silizium der Reaktionslösung in Form von Kieselsäure, Kieselsol, hochdispersem Siliziumoxid, wie z.B. Aerosil, oder in Form eines Kieselsäureesters zugeführt. Darüber hinaus kann auch ein lösliches Silikat, wie Natriumsilikat, zugefügt werden.

In Einzelfällen kann es von Vorteil sein, zusätzlich Templatverbindungen einzusetzen. Hierbei handelt es sich um strukturdirigierende Agentien (SPA), wie z.B. Alkyl- oder Arylammoniumsalze, hier vorzugsweise Phosphate, oder auch oberflächenaktive Stoffe.

Nach der gegebenen Lehre der Maßnahme 1) steht es dem Fachmann frei, diese so zu gestalten, dass das Aluminium entweder vollständig aus dem aluminiumhaltigen Substrat oder auch teilweise aus der Suspension als netzwerkbildendes Element hervorgeht. Das Merkmal "die erforderlichen netzwerkbildenden Elemente" zur Ausbildung des porösen Sekundärmaterials ist eine also hinlängliche Information für den Fachmann. Dies ergibt sich auch aus dem Zusammenhang der vorliegenden Erfindungsbeschreibung, wie insbesondere auch aus dem nachfolgenden Beispiel.

Dieses Verfahren lässt sich dadurch besonders vorteilhaft weiterbilden, indem das Mol-Verhältnis des im Unterschuss vorliegenden netzwerkbildenden Aluminiums zur Summe aller in der Suspension enthaltenden netzwerkbildenden Elemente unter 0,2, insbesondere unter 0,1, liegt. Darüber hinaus ist es vorteilhaft, wenn die wässrige Suspension, die zur Ausbildung der jeweiligen Schichten bzw. des aufzutragenden Materials herangezogen wird, auf eine Temperatur von 50 bis 250°C, insbesondere auf 80 bis 200°C, eingestellt wird.

Das erfindungsgemäße Verfahren erfährt eine besonders vorteilhafte Weiterbildung dadurch, indem auf dem mikro- oder mesoporösen Sekundärmaterial bzw. der Schicht desselben ein weiteres funktionelles poröses Material aufgebracht wird, auf das vorstehend bereits beispielhaft eingegangen wurde.

Zu diesem funktionellen porösen Material lässt sich Folgendes ausführen:
Es soll eine vorliegende Staffelung der Porenweiten fortsetzen, kann vorzugsweise eine Schutzfunktion für das Sekundärmaterial erfüllen und Fouling verhindern und die unterschiedlichen chemischen Eigenschaften von Primärschicht und Sekundärmaterial vorteilhaft ergänzen.

### Zu weiteren Vorteilen der Erfindung:

Die Vorteile der Erfindung sind insbesondere darin zu sehen, dass die Kombination von Zeolithen in Schichtform durch das gefundene erfindungsgemäße Verfahren erstmals auf der Basis von Aluminiumphosphaten mit ihrem hohen Aluminiumgehalt (Phosphat-Primärzeolithe) gelingt, die sehr gut auf metallischem Aluminium oder auf anderen Alhaltigen Trägern haften. Die Haftung des Sekundärmaterials (beispielsweise zweite Zeolith-Schicht) auf der Primärschicht ist durch eine große Mikrorauhigkeit der Primärschicht und der chemischen Ähnlichkeit (OH-Endgruppen, Aluminiumtetraeder, eventuell Silikattetraeder) sehr stark. Erfindungsgemäß lassen sich vorteilhaft Doppel- und Mehrfachschichten aus verschiedenen Zeolith-Typen (z.B. Aluminiumsilikat- und Aluminiumphosphat-Zeolith) auf einer Aluminiumphosphat-Primärschicht erzeugen.

Das erfindungsgemäße Erzeugnis zeigt vielfältige Einsatzmöglichkeiten, die insbesondere auf folgende Verbesserungen gegenüber dem Stand der Technik zurückgehen: unterschiedliche Zeolith-Strukturen: Aluminiumphosphate und Aluminiumsilikate auf Aluminiumphosphaten, einschließlich daraus abgeleitete Systeme mit weiteren Gitterionen; unterschiedliche Porenradien (große und kleine Porenöffnung), unterschiedliche Porenvolumina, unterschiedliche Orientierung der Kristalle oder der Porensysteme, lineare Porensysteme und 3D-Porensysteme; unterschiedliche Hydrophilie, Acidität, unterschiedliche postsynthetische Modifikationen, Ionenaustausch von verschiedenen Mengen und/oder Typen von Kationen (Metallen); unterschiedliche Morphologie (große Kristalle bzw. Durchgänge), geschlossene Schichten von einzelnen Kristallen mit offener Makrostruktur oder Nanopartikel/Kristallite und bisher nicht realisierbare Zeolith-Schichten als Sekundärschicht.

Es erscheint sachdienlich, die Erfindung, auch unter Bezug auf obige Ausführungen, noch technologisch darzustellen: Zunächst kann eine ALPO-, SAPO-, MeAPO- oder MeSAPO-Primärschicht (Phosphat-Primärzeolith) auf dem aluminiumhaltigen Substrat ausgebildet werden. Hierbei bedient sich die Erfindung bevorzugt der konsumierenden Aufkristallisation. Es handelt sich hier um eine Methode zur festen binderlosen Verwachsung von Phosphat-Zeolithen auf den bezeichneten aluminiumhaltigen Substraten. Dieses wird dann in eine weitere Syntheselösung eingebracht, die zur Kristallisation des funktionellen porösen Sekundärmaterials, so in Form eines zweiten Zeolithen (Sekundärzeolith) auf der Oberfläche der Phosphat-Primärschicht führt. Eine vorteilhafte Suspension hat einen hohen Hang zur heterogenen Keimbildung, wodurch das Wachstum des Sekundärmaterials, insbesondere eines Sekundärzeoliths, auf der vorliegenden Primärschicht mit ihrer großen, zeolithischen Oberfläche stattfindet. Es kommt zu einer besonders günstigen gleichmäßigen Keimbildung. Es ist vorteilhaft, die reaktionstechnischen und stofflichen Parameter der zweiten Syntheselösung so einzustellen, dass es nicht zum Auflösen der Primärschicht, nicht zum Auflösen des aluminiumhaltigen Substrats sowie nicht zur Bildung von freiem Zeolithpulver des Zeoliths und zur Kristallisation auf der Primärschicht kommt. Die Kristallisation des Sekundärzeoliths wird z.B. durch hydrothermale Synthese bei Temperaturen bis zu 250°C durchgeführt. Die konkreten Bedingungen bei der Herstellung des erfindungsgemäßen aluminiumhaltigen Substrats variieren in Abhängigkeit von der Paarung Phosphat-Primärzeolith/Sekundärzeolith und sollten demzufolge jeweils angepasst werden, was vom Fachmann handwerklich vorzunehmen ist. Zweckmäßig bei deutlich unterschiedlichen Primär- und Sekundärzeolithen ist auch eine vorgeschaltete Keimablagerung des Sekundärzeoliths auf der Primärschicht.

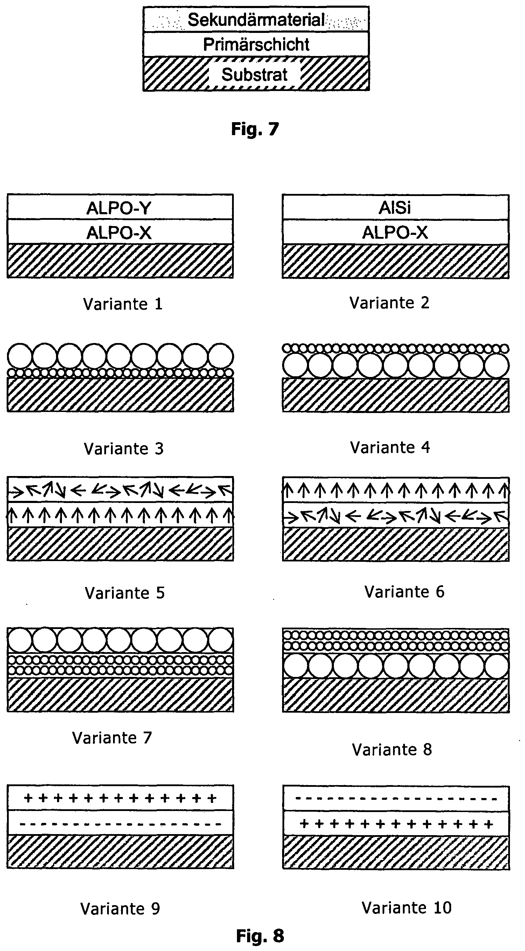

Die vorstehend detailliert beschriebene Erfindung lässt sich anhand der angeschlossenen Figuren 7 und 8 weitergehend erläutern: Die Figur 7 betrifft eine schematische Darstellung des Komposits aus aluminiumhaltigem Substrat, der ALPO-basierten Primärschicht und dem Sekundärmaterial. Die Figur 8 zeigt eine schematische Darstellung erfindungsgemäß realisierbarer Komposite durch Variation der Eigenschaften von Primärschicht und Sekundärmaterial, wobei bezüglich der einzelnen Schichten bzw. ihrer Bedeutung auf die Figur 7 verwiesen sei. Durch das Aufbringen eines zweiten Sekundärmaterials lassen sich die nachfolgenden Variationen entsprechend erweitern: mikroporöse ALPO-Primärschicht mit porösem 1) ALPO- und 2) Aluminiumsilikat oder Silikatsekundärmaterial; 3) Primärschicht bestehend aus kleineren Kristallen und Sekundärmaterial aus größeren Kristallen und umgekehrt: 4). Die einzelnen Kristalle können jeweils auch miteinander verwachsen sein. 5) und 6): unterschiedliche Orientierung der Kristalle oder der Porensysteme (z.B. lineare und dreidimensionale Porensysteme). Staffelung der Porendurchmesser: in 7) kleinere Porendurchmesser in der Primärschicht und größere im Sekundärmaterial. In 8) hat die Primärschicht die größeren Porendurchmesser. 9) und 10) versinnbildlichen unterschiedliche chemische Eigenschaften (z.B. Hydrophilie, Acidität, Gegenionen: Typ und Menge) in Primärschicht und Sekundärmaterial.

Die Erfindung soll nachfolgend anhand verschiedener Herstellungsbeispiele noch näher erläutert werden. Darin bezeichnen die Abkürzungen MFI (ZSM-5), AFI (ALPO-5), AEI (SAPO-18), und CHA (SAPO-34) zeolithische Verbindungen nach der Nomenklatur der International Zeolite Association IZA ("Atlas of Zeolite Frameworks", Ch. Baerlocher, L. B. McCusker, D. H. Olson, Elsevier, 2007).

### Beispiel 1 (MFI auf SAPO-34)

Synthese der Primärschicht: Die Herstellung der SAPO-34 (CHA) Primärschicht erfolgte über eine partielle Transformation eines Al-Trägers durch eine hydrothermale Behandlung. Als Al-Träger wurde eine Al-Folie (Dicke 160 µm, Abmessungen 6 x 8 cm, ∼9 % Al) verwendet. Diese wurde zusammen mit einer wässrigen Syntheselösung, welche die übrigen Netzwerkbildner (Phosphor und Silizium) und ein strukturdirigierendes Templat (Morpholin) enthielt, in einen Autoklav (40 ml) gegeben. Die Zusammensetzung der Syntheselösung in Oxidverhältnissen war 1,0 P₂O₅: 0,4 SiO₂ : 3,0 Morpholin : 70 H₂O. Als Phosphorquelle wurde H₃PO₄ (85 %), als Si Quelle Kieselsol (35 %) verwendet. Die hydrothermale Kristallisation erfolgte für 48 h bei 200 °C. Nach 48h Kristallisationszeit wurde der Autoklav auf Raumtemperatur gekühlt. Anschließend wurde der beschichtete Träger entnommen, mit deionisiertem Wasser gewaschen und für 12h bei RT getrocknet.

Synthese der Sekundärschicht: Die Kristallisation der MFI Sekundärschicht erfolgte in zwei Schritten. Zunächst wurde der beschichtete Träger über Silikalit-1 Kristalle gerieben. Hierdurch wurde die Oberfläche der SAPO-34 Primärschicht mit MFI Kristallen belegt, welche als Kristallisationskeime für die Sekundärschichtbildung fungieren können. Die Herstellung der Silikalit-1 Keime erfolgte bei 160 °C und 48 h Kristallisationszeit ausgehend von einer Reaktionsmischung mit folgender Zusammensetzung: 1,0 SiO₂ : 0,16 TPA₂O : 29 H₂O. Als Siliziumquelle wurde Tetraethylorthosilikat und als Templat Tetrapropylammoniumhydroxid verwendet.

Der vorbehandelte Träger wurde anschließend zusammen mit einer Reaktionsmischung für die Aufkristallisation von ZSM-5 (MFI) in einen Autoklav (40 ml) gegeben. Die molare Zusammensetzung der Reaktionsmischung war 1,0 SiO₂ 0,0088 Al₂O₃ : 0,036 K₂O : 0,056 TPA₂OH : 111 H₂O. Als Siliziumquelle wurde Tetraethylorthosilikat, als Al-Quelle Aluminiumnitrat und als Templat Tetrapropylammoniumbromid verwendet. Die hydrothermale Kristallisation wurde bei 24 h und 175 °C durchgeführt. Nach einer Kristallisationszeit von 24 h wird der Autoklav auf Raumtemperatur gekühlt, der beschichtete Träger entnommen, mit deionisiertem Wasser gewaschen und für 12 h bei RT getrocknet.

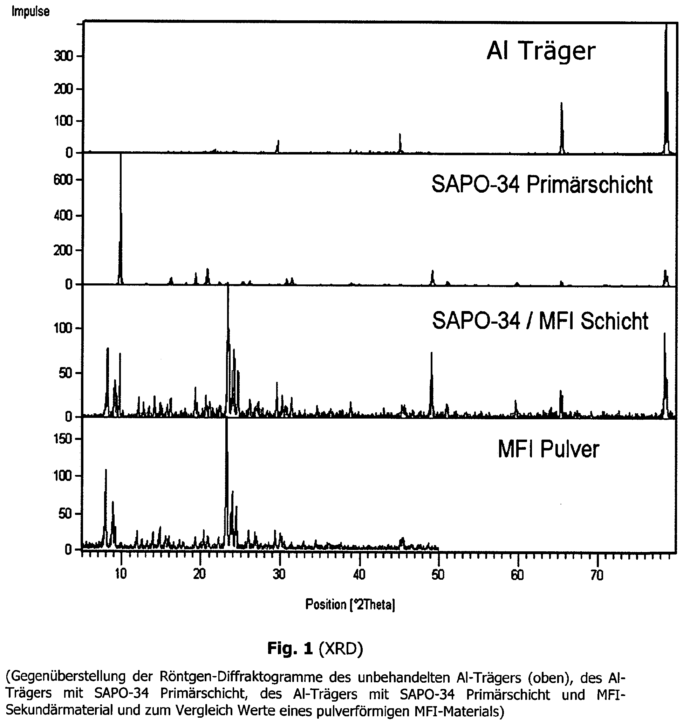

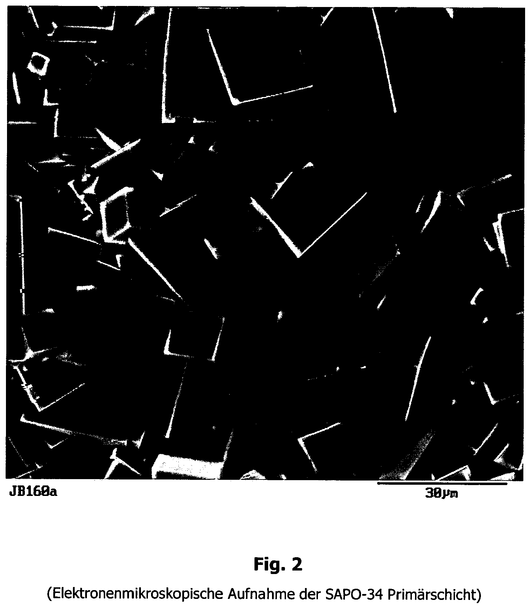

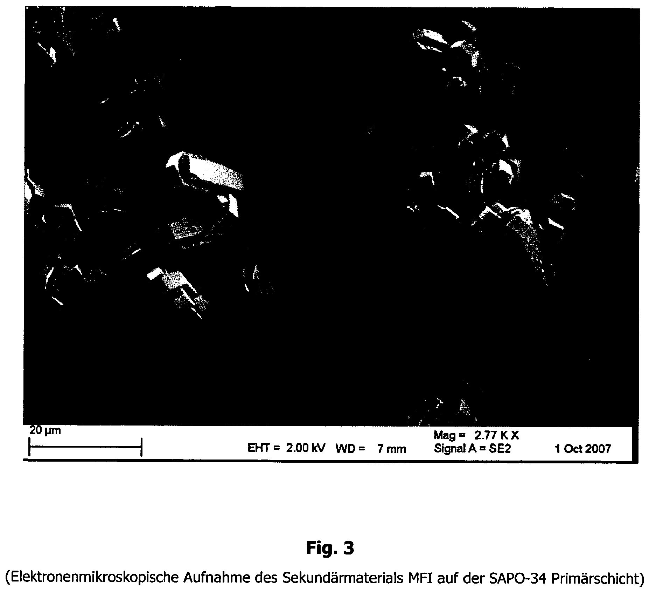

Fig. 1 zeigt die Röntgendiffraktogramme des Al-Trägers vor und nach den Beschichtungsschritten. Zusätzlich ist das Diffraktogramm der ZSM-5 Keimkristalle abgebildet. Fig. 2 zeigt eine Elektronenmikroskopieaufnahme des Trägers nach der Primärschicht- und Sekundärschichtbildung. In Fig. 3 ist dann eine Aufnahme nach der Sekundärschichtbildung zu sehen. An Hand der Diffraktogramme und der Elektronenmikroskopie-Aufnahmen kann eindeutig die Bildung der SAPO-34 Primärschicht und der ZSM-5 Sekundärschicht nachgewiesen werden.

### Beispiel 2 (ALPO-5 (AFI) auf SAPO-34 (CHA))

Synthese der Primärschicht: Die Herstellung der SAPO-34 Primärschicht erfolgte über eine partielle Transformation eines Al-Trägers durch eine hydrothermale Behandlung. Als Al-Träger wurde eine Al-Folie (Dicke 160 µm, Abmessungen 6 x 8 cm, ∼99 % Al) verwendet. Diese wurde zusammen mit einer wässrigen Syntheselösung, welche die übrigen Netzwerkbildner (Phosphor und Silizium) und ein strukturdirigierendes Templat (Morpholin) enthielt, in einen Autoklav (40 ml) gegeben. Die Zusammensetzung der Syntheselösung entsprach 1,0 P₂O₅ : 0,4 SiO₂ : 3,0 Morpholin : 70 H₂O. Als Phosphorquelle wurde H₃PO₄ (85 %), als Si Quelle Kieselsol (35 %) verwendet. Die hydrothermale Kristallisation erfolgte für 48 h bei 200 °C. Nach 48 h Kristallisationszeit wurde der Autoklav auf Raumtemperatur gekühlt. Anschließend wurde der beschichtete Träger entnommen, mit deionisiertem Wasser gewaschen und für 12 h bei RT getrocknet.

Synthese der Sekundärschicht: Die Kristallisation der ALPO-5 Sekundärschicht erfolgte durch eine zweite hydrothermale Behandlung des beschichteten Al-Trägers. Hierzu wurde ein Reaktionsansatz mit folgender molarer Zusammensetzung präpariert: 0,9 Al₂O₃ : 1,0 P₂O₅: 1,0 TEA : 50 H₂O. Als Al-Quelle wurde Pseudoböhmit, als Phosphorquelle H₃PO₄ und als Templat Triethylamin verwendet. Die Aufkristallisation der Sekundärschicht erfolgte bei 175 °C für 24 h in einem 40 ml Autoklav. Die Kristallisation wurde durch Kühlen des Autoklaven auf Raumtemperatur beendet. Der beschichtete Träger wurde anschließend aus dem Autoklaven entnommen, mit deionisiertem Wasser gewaschen und für 12 h bei RT getrocknet.

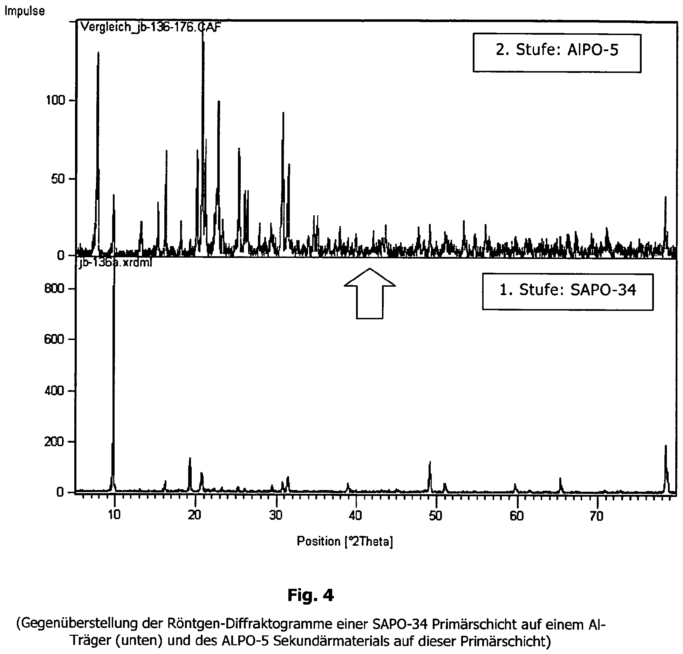

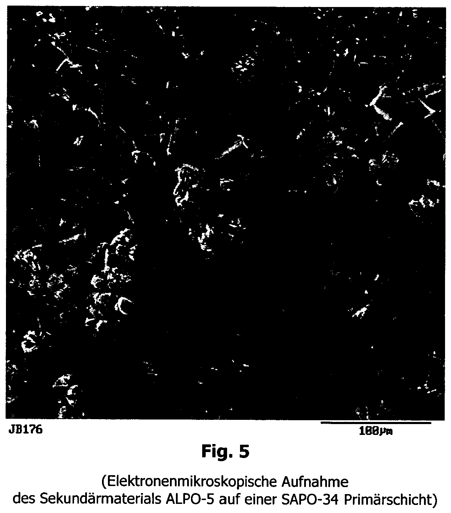

Fig. 4 zeigt die Röntgendiffraktogramme des Komposits nach Primär- und Sekundärschichtbildung und Fig. 5 zeigt eine Elektronenmikroskopieaufnahme der ALPO-5 Sekundärschicht. An Hand der Diffraktogramme und der Elektronenmikroskopie-Aufnahmen kann eindeutig die Bildung der SAPO-34 Primärschicht und der AIPO-5 Sekundärschicht nachgewiesen werden.

### Beispiel 3 (AFI auf SAPO-18 (AEI))

Synthese der Primärschicht: Die Herstellung der SAPO-18 Primärschicht erfolgte über eine partielle Transformation eines Al-Trägers durch eine hydrothermale Behandlung. Als Al-Träger wurde eine Al-Folie (Dicke 160 µm, Abmessungen 6 x 8 cm, ∼99 % Al) verwendet. Diese wurde zusammen mit einer wässrigen Syntheselösung, welche die übrigen Netzwerkbildner (Phosphor und Silizium) und ein strukturdirigierendes Templat (Diisopropylehthylamin) enthielt, in einen Autoklav (40 ml) gegeben. Die Zusammensetzung der Syntheselösung entsprach 1,0 P₂O₅: 0,4 SiO₂ : 3,0 Diisopropylethylamin : 70 H₂O. Als Phosphorquelle wurde H₃PO₄ (85 %), als Si Quelle Kieselsol (35 %) verwendet. Die hydrothermale Kristallisation erfolgte für 48 h bei 175 °C. Nach 48 h Kristallisationszeit wurde der Autoklav auf Raumtemperatur gekühlt. Anschließend wurde der beschichtete Träger entnommen, mit deionisiertem Wasser gewaschen und für 12 h bei RT getrocknet.

Synthese der Sekundärschicht: Die Kristallisation der SAPO-34 Sekundärschicht erfolgte durch eine zweite hydrothermale Behandlung der beschichteten Al-Träger. Hierzu wurde ein Reaktionsansatz mit folgender molarer Zusammensetzung präpariert: 0,8 Al₂O₃ : 1,0 P₂O₅: 0,4 SiO₂ : 3,0 Morpholin : 70 H₂O. Als Al-Quelle wurde Pseudoböhmit, als Phosphorquelle H₃PO₄ als Siliziumquelle Kieselsol und als Templat Morpholin verwendet. Die Aufkristallisation der Sekundärschicht erfolgte bei 200 °C für 48 h in einem 40 ml Autoklav. Nach dem Kühlen des Autoklaven auf Raumtemperatur wurde der beschichtete Träger aus dem Autoklaven entnommen, mit deionisiertem Wasser gewaschen und für 12 h bei RT getrocknet.

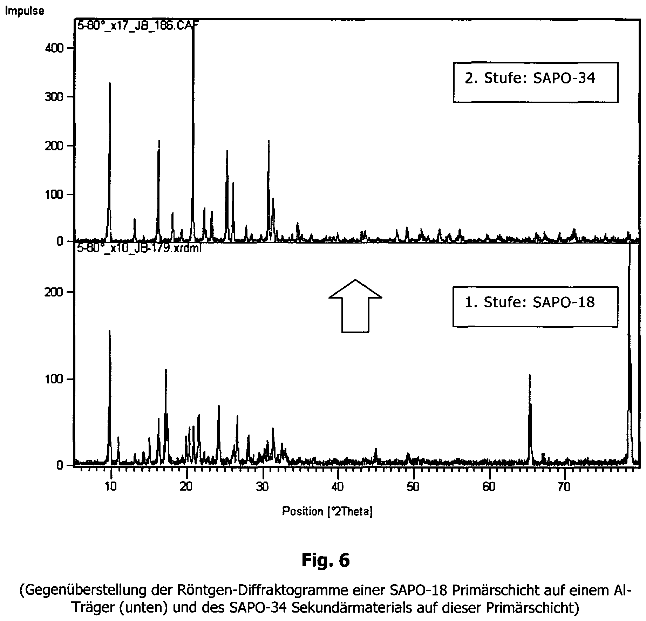

Fig. 6 zeigt die Röntgendiffraktogramme des Al-Trägers nach der Primär- und Sekundärschichtbildung. An Hand der Diffraktogramme kann die Bildung der SAPO-18 Primärschicht und der SAPO-34 Sekundärschicht beobachtet werden.

## Patentansprüche

1. Aluminiumhaltiges Substrat mit mindestens einer oberflächlich aufgebrachten mikroporösen Schicht eines Aluminiumphosphat-Zeoliths (ALPO) und weiteren Schichten, **dadurch gekennzeichnet, dass** die mikroporöse Schicht des Aluminiumphosphat-Zeoliths (ALPO) eine Primärschicht darstellt, auf der sich ein vom Material der Primärschicht unterscheidendes mikro- oder mesoporöses Sekundärmaterial befindet, die mikroporöse Primärschicht und das mikro- oder mesoporöse Sekundärmaterial eine Unterschiedlichkeit in der chemischen Art und in ihrem Porensystem aufweisen, wobei
1.) die mikroporöse Primärschicht und das mikroporöse Sekundärmaterial
a1) eine Unterschiedlichkeit in einer graduell abgestuften Porosität aufweisen, wobei die mikroporöse Primärschicht einen mittleren Porendurchmesser von 0,2 bis 1 nm und das mikroporöse Sekundärmaterial einen mittleren Porendurchmesser von 0,4 bis 1,5 nm aufweist und
b1) eine Unterschiedlichkeit in der chemischen Art zeigen, wobei das mikroporöse Sekundärmaterial in Form von zeolithischen Silikaten oder Alumosilikaten vorliegt, oder
2.) die mikroporöse Primärschicht und das mesoporöse Sekundärmaterial
a2) eine Unterschiedlichkeit in einer graduell abgestuften Porosität aufweisen, wobei die mikroporöse Primärschicht einen mittleren Porendurchmesser von 0,2 bis 1 nm und das mesoporöse Sekundärmaterial einen mittleren Porendurchmesser von 2 bis 5 nm aufweist und
b2) eine Unterschiedlichkeit in der chemischen Art zeigen, wobei das mesoporöse Sekundärmaterial in Form von Silikaten vorliegt.

2. Aluminiumhaltiges Substrat nach Anspruch 1, **dadurch gekennzeichnet, dass** das aluminiumhaltige Substrat auf Aluminium, einer aluminiumhaltigen Legierung, insbesondere einem mit Aluminium legierten Stahl, oder einer aluminiumhaltigen Keramik beruht.

3. Aluminiumhaltiges Substrat nach Anspruch 1 oder 2, **dadurch gekennzeichnet, dass** der Aluminiumphosphat-Zeolith (ALPO) als SAPO, MeALPO oder MeSAPO vorliegt.

4. Aluminiumhaltiges Substrat nach einem der Ansprüche 1 bis 3, **dadurch gekennzeichnet, dass** die mikroporöse Primärschicht einen mittleren Porendurchmesser von 0,3 bis 0,7 nm, aufweist.

5. Aluminiumhaltiges Substrat nach mindestens einem der Ansprüche 1 bis 4, **dadurch gekennzeichnet, dass** der mittlere Porendurchmesser der mikroporösen Primärschicht kleiner als der des mikroporösen Sekundärmaterials ist.

6. Aluminiumhaltiges Substrat nach mindestens einem der Ansprüche 1 bis 5, **dadurch gekennzeichnet, dass** der mittlere Porendurchmesser des mikroporösen Sekundärmaterials 0,5 bis 1,3 nm beträgt.

7. Aluminiumhaltiges Substrat nach mindestens einem der Ansprüche 1 bis 5, **dadurch gekennzeichnet, dass** der mittlere Porendurchmesser des mesoporösen Sekundärmaterials 2,5 bis 4 nm beträgt.

8. Aluminiumhaltiges Substrat nach mindestens einem der Ansprüche 1 bis 7, **dadurch gekennzeichnet, dass** die mikroporöse Primärschicht eine Stärke von mindestens 1 µm und/oder das mikro- oder mesoporöse Sekundärmaterial eine Stärke von mindestens 1 µm, insbesondere mindestens 5 µm, aufweisen.

9. Aluminiumhaltiges Substrat nach mindestens einem der Ansprüche 1 bis 8, **dadurch gekennzeichnet, dass** das mikroporöse Sekundärmaterial in Form von zeolithischen Silikaten als FAU, MFI, LTA, BEA, CHA vorliegt.

10. Aluminiumhaltiges Substrat nach mindestens einem der Ansprüche 1 bis 9, **dadurch gekennzeichnet, dass** auf dem mikro- oder mesoporösen Sekundärmaterial mindestens ein weiteres Material, geschlossen oder unterbrochen, ausgebildet ist, das insbesondere auf einem porösen Material beruht.

11. Aluminiumhaltiges Substrat nach mindestens einem der Ansprüche 1 bis 10, **dadurch gekennzeichnet, dass** es eine äußere Schicht aufweist, die die Funktion einer Anti-Fouling-Schicht erfüllt.

12. Aluminiumhaltiges Substrat nach mindestens einem der Ansprüche 1 bis 11, **dadurch gekennzeichnet, dass** die mikroporöse Primärschicht und/oder das mikro- oder mesoporöse Sekundärmaterial funktionell wirkende Substanzen und/oder Metallionen enthalten, insbesondere katalytisch wirksame Metallionen und Protonen.

13. Aluminiumhaltiges Substrat nach Anspruch 12, **dadurch gekennzeichnet, dass** die Metallionen Platin-, Palladium-, Ruthenium-, Eisen-, Kupfer-, Kobalt-, Zink- oder Nickelionen darstellen.

14. Verfahren zur Herstellung eines aluminiumhaltigen Substrats nach mindestens einem der vorhergehenden Ansprüche, **dadurch gekennzeichnet, dass 1.** ein aluminiumhaltiges Substrat in einer mindestens Phosphor als netzwerkbildendes Element enthaltenden wässrigen Suspension hydrothermal behandelt und darauf durch eine in-situ Kristallisation eine mikroporöse Primärschicht eines Aluminiumphosphat-Zeoliths (ALPO) ausgebildet wird, wobei das Mol-Verhältnis zwischen dem in der wässrigen Suspension im Unterschuss vorliegenden netzwerkbildenden Aluminium zur Summe aller in der wässrigen Suspension vorliegenden netzwerkbildende Elemente unter 0,5 liegt, so dass das erforderliche Aluminium zum Ausgleich des Unterschusses dem aluminiumhaltigen Substrat entnommen wird, und dass **2.** auf der mikroporösen Primärschicht ein mikro- oder mesoporöses Sekundärmaterial dadurch ausgebildet wird, indem das die mikroporöse Primärschicht aufweisende aluminiumhaltige Substrat einer weiteren Behandlung in einer wässrigen Suspension, die die erforderlichen netzwerkbildenden Elemente für die Ausbildung des mikro- oder mesoporösen Sekundärmaterials enthält, in einer solchen Weise durchgeführt wird, dass die mikroporöse Primärschicht und das mikro- oder mesoporöse Sekundärmaterial eine Unterschiedlichkeit in der chemischen Art und in ihrem Porensystem aufweisen, wobei
1.) die mikroporöse Primärschicht und das mikroporöse Sekundärmaterial
a1) eine Unterschiedlichkeit in einer graduell abgestuften Porosität aufweisen, wobei die mikroporöse Primärschicht einen mittleren Porendurchmesser von 0,2 bis 1 nm und das mikroporöse Sekundärmaterial einen mittleren Porendurchmesser von 0,4 bis 1,5 nm aufweist und
b1) eine Unterschiedlichkeit in der chemischen Art zeigt, wobei das mikroporöse Sekundärmaterial in Form von zeolithischen Silikaten oder Alumosilikaten vorliegt, oder
2.) die mikroporöse Primärschicht und das mesoporöse Sekundärmaterial
a2) eine Unterschiedlichkeit in einer graduell abgestuften Porosität aufweisen, wobei die mikroporöse Primärschicht einen mittleren Porendurchmesser von 0,2 bis 1 nm und das mesoporöse Sekundärmaterial einen mittleren Porendurchmesser von 2 bis 5 nm aufweist und
b2) eine Unterschiedlichkeit in der chemischen Art zeigen, wobei das mesoporöse Sekundärmaterial in Form von Silikaten vorliegt.

15. Verfahren nach Anspruch 14, **dadurch gekennzeichnet, dass** das Mol-Verhältnis des im Unterschuss vorliegenden netzwerkbildenden Aluminiums zur Summe aller in der Suspension enthaltenden netzwerkbildenden Elemente unter 0,2, insbesondere unter 0,1, liegt.

16. Verfahren nach Anspruch 14 oder 15, **dadurch gekennzeichnet, dass** die wässrige Suspension, die zur der Ausbildung der jeweiligen Schichten bzw. des aufzutragenden Materials herangezogen wird, auf eine Temperatur von 50 bis 250 °C, insbesondere auf 80 bis 200 °C, eingestellt wird.

17. Verfahren nach mindestens einem der Ansprüche 14 bis 16, **dadurch gekennzeichnet, dass** auf dem mikro- oder mesoporösen Sekundärmaterial ein weiteres poröses Material aufgebracht wird.

18. Verwendung des aluminiumhaltigen Substrats nach mindestens einem der Ansprüche 1 bis 14 als Wärmetauscher, als katalytischer Reaktor oder als Bauelement in der Wärmetransformationstechnik mit Anti-Fouling-Wirkung.

19. Verwendung des Aluminium-haltigen Substrats nach Anspruch 10, wobei die mikroporöse Primärschicht, das mikroporöse oder mesoporöse Sekundärmaterial und das weitere Material zur Begünstigung des Stofftransports bei der Anwendung eine graduell abgestufte Porosität aufweisen.

## Claims

1. An aluminium-containing substrate with at least one superficially applied microporous layer of an aluminium phosphate zeolite (ALPO) and further layers, **characterised in that** the microporous layer of the aluminium phosphate zeolite (ALPO) is a primary layer, on which a microporous or mesoporous secondary material, which is different from the material of the primary layer, is located, wherein the microporous primary layer and the microporous or mesoporous secondary material have a difference with respect to the chemical type and to their pore system, wherein
1.) the microporous primary layer and the microporous secondary material a1)
have a difference with respect to a gradually stepped porosity, wherein the microporous primary layer has a mean pore diameter of 0.2 to 1 nm and the microporous secondary material has a mean pore diameter of 0.4 to 1.5 nm, and
b1) have a difference with respect to the chemical type, wherein the microporous secondary material is present in the form of zeolitic silicates or aluminosilicates or
2.) the microporous primary layer and the mesoporous secondary material a2)
have a difference with respect to a gradually stepped porosity, wherein the microporous primary layer has a mean pore diameter of 0.2 to 1 nm and the mesoporous secondary material has a mean pore diameter of 2 to 5 nm, and
b2) have a difference in the chemical type, wherein the mesoporous secondary material is present in the form of silicates.

2. An aluminium-containing substrate according to claim 1, **characterised in that** the aluminium-containing substrate is based on aluminium, an aluminium-containing alloy, in particular a steel alloyed with aluminium, or an aluminium-containing ceramic.

3. An aluminium-containing substrate according to claim 1 or 2, **characterised in that** the aluminium phosphate zeolite (ALPO) is present as SAPO, MeALPO or MeSAPO.

4. An aluminium-containing substrate according to one of claims 1 to 3, **characterised in that** the microporous primary layer has a mean pore diameter of 0.3 to 0.7 nm.

5. An aluminium-containing substrate according to at least one of claims 1 to 4, **characterised in that** the mean pore diameter of the microporous primary layer is smaller than that of the microporous secondary material.

6. An aluminium-containing substrate according to at least one of claims 1 to 5, **characterised in that** the mean pore diameter of the microporous secondary material is 0.5 to 1.3 nm.

7. An aluminium-containing substrate according to at least one of claims 1 to 5, **characterised in that** the mean pore diameter of the mesoporous secondary material is 2.5 to 4 nm.

8. An aluminium-containing substrate according to at least one of claims 1 to 7, **characterised in that** the microporous primary layer has a thickness of at least 1 µm and/or the microporous or mesoporous secondary material has a thickness of at least 1 µm, in particular at least 5 µm.

9. An aluminium-containing substrate according to at least one of claims 1 to 8, **characterised in that** the microporous secondary material is present in the form of zeolitic silicates as FAU, MFI, LTA, BEA, CHA.

10. An aluminium-containing substrate according to at least one of claims 1 to 9, **characterised in that** at least one further material, closed or discontinuous, is formed on the microporous or mesoporous secondary material, in particular based on a porous material.

11. An aluminium-containing substrate according to at least one of claims 1 to 10, **characterised in that** it has an outer layer which fulfils the function of an anti-fouling layer.

12. An aluminium-containing substrate according to at least one of claims 1 to 11, **characterised in that** the microporous primary layer and/or the microporous or mesoporous secondary material contain functionally acting substances and/or metal ions, in particular catalytically active metal ions and protons.

13. An aluminium-containing substrate according to claim 12, **characterised in that** the metal ions are platinum, palladium, ruthenium, iron, copper, cobalt, zinc or nickel ions.

14. A method for producing an aluminium-containing substrate according to at least one of the preceding claims, **characterised in that** 1. an aluminium-containing substrate is hydrothermally treated in an aqueous suspension containing at least phosphorous as network-forming element and a microporous primary layer of an aluminium phosphate zeolite (ALPO) is formed thereon by an in-situ crystallisation, wherein the molar ratio between the network-forming aluminium that is deficient in the aqueous suspension and the sum of all network-forming elements present in the aqueous suspension being below 0.5, so that the required aluminium to compensate the deficiency is removed from the aluminium-containing substrate, and **in that 2.** a microporous or mesoporous secondary material is formed on the microporous primary layer **in that** the aluminium-containing substrate having the microporous primary layer is subjected to a further treatment in an aqueous suspension, which contains the required network-forming elements for forming the microporous or mesoporous secondary material, in such a way that the microporous primary layer and the microporous or mesoporous secondary material have a difference with respect to the chemical type and their pore system,
wherein
1.) the microporous primary layer and the microporous secondary material a1)
have a difference with respect to a gradually stepped porosity, wherein the microporous primary layer has a mean pore diameter of 0.2 to 1 nm and the microporous secondary material has a mean pore diameter of 0.4 to 1.5 nm, and
b1) have a difference with respect to the chemical type, wherein the microporous secondary material is present in the form of zeolitic silicates or aluminosilicates or
2.) the microporous primary layer and the mesoporous secondary material a2)
have a difference with respect to a gradually stepped porosity, wherein the microporous primary layer has a mean pore diameter of 0.2 to 1 nm and the mesoporous secondary material has a mean pore diameter of 2 to 5 nm, and
b2) have a difference in the chemical type, wherein the mesoporous secondary material is present in the form of silicates.

15. A method according to claim 14, **characterised in that** the molar ratio of the deficient network-forming aluminium and the sum of all the network-forming elements contained in the suspension is below 0.2, in particular below 0.1.

16. A method according to claim 14 or 15, **characterised in that** the aqueous suspension, which is used to form the respective layers or the material to be applied, is adjusted to a temperature of 50 to 250°C, in particular to 80 to 200°C.

17. A method according to at least one of claims 14 to 16, **characterised in that** a further porous material is applied to the microporous or mesoporous secondary material.

18. A use of the aluminium-containing substrate according to at least one of claims 1 to 14 as a heat exchanger, as a catalytic reactor or as a construction element in heat transformation technology with an anti-fouling effect.

19. Use of the aluminium-containing substrate according to claim 10, wherein the microporous primary layer, the microporous and the mesoporous secondary material and further material for improving the material transport in connection with the use have a gradually stepped porosity.

## Revendications

1. Substrat contenant de l'aluminium, doté d'au moins une couche microporeuse faite d'un zéolithe de phosphate d'aluminium (ALPO), déposée en surface, et d'autres couches, **caractérisé en ce que** la couche microporeuse du zéolithe de phosphate d'aluminium (ALPO) constitue une couche primaire sur laquelle se trouve un matériau secondaire micro- ou mésoporeux distinctif du matériau de la couche primaire, la couche primaire microporeuse et le matériau secondaire micro- ou mésoporeux présentant une caractéristique distinctive au niveau du type chimique et de leur système de pores, dans lequel
1.) la couche primaire microporeuse et le matériau secondaire microporeux présentent
a1) une caractéristique distinctive au niveau d'une porosité progressive, la couche primaire microporeuse présentant un diamètre moyen de pores de 0,2 à 1 nm et le matériau secondaire microporeux présentant un diamètre moyen de pores de 0,4 à 1,5 nm, et
b1) une caractéristique distinctive au niveau du type chimique, le matériau secondaire microporeux se présentant sous la forme de silicates ou d'aluminosilicates zéolithiques, ou
2.) la couche primaire microporeuse et le matériau secondaire mésoporeux présentent
a2) une caractéristique distinctive au niveau d'une porosité progressive, la couche primaire microporeuse présentant un diamètre moyen de pores de 0,2 à 1 nm et le matériau secondaire mésoporeux présentant un diamètre moyen de pores de 2 à 5 nm, et
b2) une caractéristique distinctive au niveau du type chimique, le matériau secondaire mésoporeux se présentant sous la forme de silicates.

2. Substrat contenant de l'aluminium selon la revendication 1, le substrat contenant de l'aluminium étant **caractérisé en ce qu'**il est à base d'aluminium, d'un alliage contenant de l'aluminium, en particulier d'un acier allié à l'aluminium, ou d'une céramique contenant de l'aluminium.

3. Substrat contenant de l'aluminium selon la revendication 1 ou 2, **caractérisé en ce que** le zéolithe de phosphate d'aluminium (ALPO) se présente sous forme de SAPO, MeALPO, ou MeSAPO.

4. Substrat contenant de l'aluminium selon l'une des revendications 1 à 3, **caractérisé en ce que** la couche primaire microporeuse présente un diamètre moyen de pores de 0,3 à 0,7 nm.

5. Substrat contenant de l'aluminium selon au moins l'une des revendications 1 à 4, **caractérisé en ce que** le diamètre moyen de pores de la couche primaire microporeuse est inférieur à celui du matériau secondaire microporeux.

6. Substrat contenant de l'aluminium selon au moins l'une des revendications 1 à 5, **caractérisé en ce que** le diamètre moyen de pores du matériau secondaire microporeux est de 0,5 à 1,3 nm.

7. Substrat contenant de l'aluminium selon au moins l'une des revendications 1 à 5, **caractérisé en ce que** le diamètre moyen de pores du matériau secondaire mésoporeux est de 2,5 à 4 nm.

8. Substrat contenant de l'aluminium selon au moins l'une des revendications 1 à 7, **caractérisé en ce que** la couche primaire microporeuse présente une épaisseur d'au moins 1 µm et/ou **en ce que** le matériau secondaire micro- ou mésoporeux présente une épaisseur d'au moins 1 µm, en particulier d'au moins 5 µm.

9. Substrat contenant de l'aluminium selon au moins l'une des revendications 1 à 8, **caractérisé en ce que** le matériau secondaire microporeux se présente sous la forme de silicates zéolithiques en tant que FAU, MFI, LTA, BEA, CHA.

10. Substrat contenant de l'aluminium selon au moins l'une des revendications 1 à 9, **caractérisé en ce qu'**au moins un autre matériau, continu ou discontinu, à base notamment d'un matériau poreux, est formé sur le matériau secondaire micro- ou mésoporeux.

11. Substrat contenant de l'aluminium selon au moins l'une des revendications 1 à 10, **caractérisé en ce qu'**il présente une couche externe qui assure la fonction d'une couche anti-salissure.

12. Substrat contenant de l'aluminium selon au moins l'une des revendications 1 à 11, **caractérisé en ce que** la couche primaire microporeuse et/ou le matériau secondaire micro- ou mésoporeux contiennent des substances et/ou des ions métalliques ayant une action fonctionnelle, notamment des ions métalliques et des protons ayant une action catalytique.

13. Substrat contenant de l'aluminium selon la revendication 12, **caractérisé en ce que** les ions métalliques consistent en ions platine, palladium, ruthénium, fer, cuivre, cobalt, zinc ou nickel.

14. Procédé de production d'un substrat contenant de l'aluminium selon au moins l'une des revendications précédentes, **caractérisé en ce que** 1. un substrat contenant de l'aluminium est soumis à un traitement hydrothermique dans une suspension aqueuse contenant au moins du phosphore à titre d'élément générateur de réseau et qu'ensuite une couche primaire microporeuse d'un zéolithe de phosphate d'aluminium (ALPO) est formée par le biais d'une cristallisation *in situ,* où le rapport molaire entre l'aluminium générateur de réseau présent en quantité inférieure dans la suspension aqueuse et la somme de tous les éléments générateurs de réseau présents dans la suspension aqueuse est inférieur à 0,5, de sorte que l'aluminium nécessaire à la compensation de la quantité inférieure soit prélevé au substrat contenant de l'aluminium, et **en ce que** 2. un matériau secondaire micro- ou mésoporeux est formé sur la couche primaire microporeuse en soumettant le substrat contenant de l'aluminium présentant la couche primaire microporeuse à un traitement ultérieur dans une suspension aqueuse qui contient les éléments générateurs de réseau nécessaires pour la formation du matériau secondaire micro- ou mésoporeux de telle sorte que la couche primaire microporeuse et le matériau secondaire micro- ou mésoporeux présentent une caractéristique distinctive au niveau du type chimique et de leur système de pores, où
1.) la couche primaire microporeuse et le matériau secondaire microporeux présentent
a1) une caractéristique distinctive au niveau d'une porosité progressive, la couche primaire microporeuse présentant un diamètre moyen de pores de 0,2 à 1 nm et le matériau secondaire microporeux présentant un diamètre moyen de pores de 0,4 à 1,5 nm, et
b1) une caractéristique distinctive au niveau du type chimique, le matériau secondaire microporeux se présentant sous la forme de silicates ou d'aluminosilicates zéolithiques, ou
2.) la couche primaire microporeuse et le matériau secondaire mésoporeux présentent
a2) une caractéristique distinctive au niveau d'une porosité progressive, la couche primaire microporeuse présentant un diamètre moyen de pores de 0,2 à 1 nm et le matériau secondaire mésoporeux présentant un diamètre moyen de pores de 2 à 5 nm, et
b2) une caractéristique distinctive au niveau du type chimique, le matériau secondaire mésoporeux se présentant sous la forme de silicates.

15. Procédé selon la revendication 14, **caractérisé en ce que** le rapport molaire de l'aluminium générateur de réseau présent en quantité inférieure et la somme de tous les éléments générateurs de réseau présents dans la suspension est inférieur à 0,2, notamment inférieur à 0,1.

16. Procédé selon la revendication 14 ou 15, **caractérisé en ce que** la suspension aqueuse qui est mise en oeuvre pour la formation de chaque couche et/ou du matériau à déposer, est portée à une température de 50 à 250°C, notamment de 80 à 200°C.

17. Procédé selon au moins l'une des revendications 14 à 16, **caractérisé en ce qu'**un autre matériau poreux est déposé sur le matériau secondaire micro- ou mésoporeux.

18. Utilisation du substrat contenant de l'aluminium selon au moins l'une des revendications 1 à 14 comme caloporteur, comme réacteur catalytique ou comme composant dans la technique de transformation thermique ayant un effet anti-salissure.

19. Utilisation du substrat contenant de l'aluminium selon la revendication 10, où la couche primaire microporeuse, le matériau secondaire microporeux ou mésoporeux et l'autre matériau présentent une porosité progressive pour favoriser le transport des substances lors de leur emploi.
